# EUROPEAN PATENT APPLICATION

(11) **EP 1 728 761 A1**
(43) Date of publication of application: **06.12.2006**
(21) Application number: 05011931.2
(22) Date of filing: 02.06.2005
(51) Int. Cl.: C01B 3/38, C01B 3/36, B01J 8/02, B01J 19/26, F23D 14/24, F23D 14/32, F23C 9/00

(54) **Process for producing synthesis gas and related apparatus**

(71) Applicant: Casale Chemicals S.A., 6900 Lugano-Besso (CH)
(72) Inventor: Bedetti, Gianfranco, 20149 Milano (IT); Filippi, Ermanno, 6976 Castagnola (CH); Zanichelli, Luca, 22010 Grandola ed Uniti (CO) (IT)
(74) Representative: Zardi, Marco

(57) **Abstract**

A process for producing synthesis gas (70) through autothermal catalytic reforming of a feed gaseous flow (55) comprising hydrocarbons, obtaining partially transformed gas (65) and synthesis gas (70), said feed gaseous flow (55) comprising hydrocarbons being mixed with a part (66) of said partially transformed gas (65), before being subjected to said autothermal catalytic reforming, so as to achieve a dilution of the concentration of the hydrocarbons present in it.

## Description

### Field of application

The present invention refers, in its most general aspect, to a process for producing synthesis gas, comprising hydrogen and carbon monoxide, essentially based upon an autothermal catalytic reforming treatment of a feed gaseous flow comprising hydrocarbons, preferably a natural gas, like for example methane, obtaining synthesis gas.

The invention also refers to an apparatus for producing synthesis gas that carries out the aforementioned process.

### Prior Art

As known, to produce synthesis gas, comprising in particular hydrogen and carbon monoxide, from gaseous hydrocarbons, natural gas like methane and similar starting materials, i.e. from a feed gaseous flow comprising hydrocarbons, a so-called autothermal catalytic reforming treatment is widely used in which the hydrocarbons present in said feed gaseous flow are partially oxidized, consequently obtaining the desired synthesis gas.

Autothermal catalytic reforming notoriously comprises an extensive oxidation step, i.e. a partial combustion step with oxygen, of the feed gaseous flow comprising hydrocarbons, obtaining a gas having a substantially reduced hydrocarbon (methane) content with respect to the feed gaseous flow, and a step in which the gas thus obtained is subjected to completion of the reforming of the hydrocarbons still present in it, through passage through an appropriate catalyst, until equilibrium of the reforming and shift reactions has been achieved, or almost achieved.

The aforementioned gas, obtained from the aforementioned partial combustion with oxygen of the feed gaseous flow and comprising hydrogen, carbon monoxide, carbon dioxide, steam and hydrocarbons, is called "partially transformed gas", and this definition shall be used in the rest of the description and in the subsequent claims.

Although advantageous from different points of view, the aforementioned process the prior art has recognized drawbacks, the main one of which consists of the fact that the feed gaseous flow comprising hydrocarbons, above all in the case in which it contains a high concentration of hydrocarbons, when subjected to partial combustion with oxygen in the autothermal reformer, has the real risk of generating significant amounts of soot, due to the high temperatures that are reached in the zones without oxygen inevitably present in the mixing processes.

And the production of soot is notoriously associated with a high possibility of quick poisoning of the catalyst used for the autothermal reforming, as well as the dirtying of the apparatuses downstream of the reformer, in particular of the boilers, with consequent high maintenance costs. The soot also negatively influences both the global yield of the process, due to the lesser amount of hydrogen and carbon monoxide produced with the same hydrocarbons burnt, and the overall conduction of the autothermal reformer itself.

### Summary of the invention

The technical problem underlying the present invention is that of devising and providing a process for producing synthesis gas of the type considered, capable of allowing high production capacities with high yields and capable of eliminating the production of soot in the autothermal reformer also in the presence of high concentrations of hydrocarbons, so as to overcome the quoted limitations and/or drawbacks with reference to the prior art in a simple and effective way.

This problem is solved according to the present invention by a process for producing synthesis gas, through autothermal catalytic reforming treatment of a feed gaseous flow comprising hydrocarbons, obtaining partially transformed gas and synthesis gas, characterized in that said feed gaseous flow comprising hydrocarbons is mixed with a part of said partially transformed gas, before being subjected to said autothermal catalytic reforming, so as to achieve a dilution of the concentration of the hydrocarbons present in it.

Advantageously, the amount of partially transformed gas, mixed with said feed gaseous flow comprising hydrocarbons, is such that in the gaseous mixture to be subjected to autothermal reforming, the concentration of hydrocarbons is approximately between 10% and 50%.

Indeed, at these hydrocarbon concentration values in the gaseous mixture to be subjected to extensive oxidation in the autothermal reformer, it has been found that there is zero soot formation.

Moreover, advantageously, the hydrogen contained in the partially transformed gas used to dilute the feed gaseous flow counteracts - at chemical level - the formation of soot.

Further characteristics and advantages of the process for producing synthesis gas according to the present invention shall become clear from the following description of a preferred embodiment thereof, given for indicating and not limiting purposes with reference to the attached drawings.

### Brief description of the drawings

Figure 1 represents a block diagram of a process for producing synthesis gas according to the present invention;
Figure 2 schematically represents an axial section view of an autothermal reformer used to carry out the process of the present invention.
Figure 3 schematically represents a cross section of the autothermal reformer of figure 2, taken according to the plane B-B, traced in figure 2.

### Detailed description of a preferred embodiment

With reference to the figures, the process for producing synthesis gas 70 according to the present invention is based upon autothermal catalytic reforming treatment of a feed gaseous flow 55 comprising hydrocarbons, for example a natural gas like methane and similar.

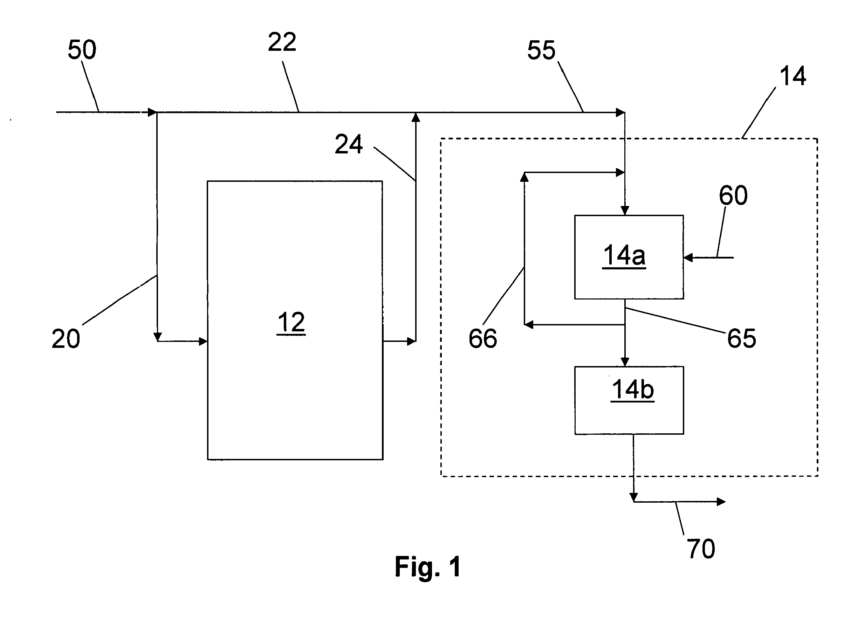

In the non-limiting example illustrated in the block diagram of figure 1, the autothermal catalytic reforming treatment is preceded by a treatment of so-called primary steam reforming and/or a pre-reforming treatment. More specifically, a part 20 of a gaseous flow 50 comprising hydrocarbons is sent, through a relative duct, to a primary steam reformer 12, to be subjected to said steam reforming, in a per se conventional manner. The remaining part 22 of said gaseous flow 50 comprising hydrocarbons (untreated part) is sent downstream of said primary reformer 12, through a relative by-pass duct.

From the primary steam reforming a gaseous flow 24 comprising carbon monoxide, hydrogen, carbon dioxide, steam and unreacted hydrocarbons (for example CH₄) is obtained that, downstream of said primary reformer 12, after having crossed a relative duct, is recombined with said untreated part 22 of the gaseous flow 50 comprising hydrocarbons, to constitute the feed gaseous flow 55 comprising hydrocarbons.

The feed gaseous flow 55 is fed, through a duct 26, to an autothermal catalytic reformer 14, to be subjected to an autothermal catalytic reforming treatment, said treatment essentially comprising:
- a partial combustion step with oxygen, in a first zone 14a of said autothermal reformer 14, extending substantially from the inlet therein of the feed gaseous flow 55 comprising hydrocarbons up to the upper surface (free surface) of a catalytic bed 16, and into which zone 14a the necessary amount of oxygen 60 is also fed (for example through a plurality of appropriate nozzles 28), and
- a catalytic reforming step, through said appropriate catalytic bed 16, with which said reformer 14 is equipped in a second zone 14b thereof, in direct fluid communication with said zone 14a.

From the partial combustion step with oxygen 60 a gas is obtained having a reduced residual content of hydrocarbons (for example methane) and hereafter called partially transformed gas 65 from which, after completion of the reforming through the said catalytic bed 16, the desired synthesis gas 70 is obtained that is at the chemical equilibrium.

In accordance with the present invention, said feed gaseous flow 55 comprising hydrocarbons, fed to the autothermal reformer 14, is mixed with a part 66 of said partially transformed gas 65, before being subjected to said autothermal catalytic reforming, in particular before being subjected to the step of partial combustion with oxygen 60 of said autothermal reforming, so as to achieve a dilution, with hydrogen, carbon monoxide and carbon dioxide, of the concentration of the hydrocarbons present in it. In particular and advantageously, such mixing is carried out in a peripheral part 14d of the zone 14a that is situated at the inlet of said reformer 14.

Moreover, the amount of partially transformed gas 65 mixed with said feed gaseous flow 55 comprising hydrocarbons, is preferably such that in the gaseous mixture, to be subjected to the step of partial combustion with oxygen 60 of said autothermal reforming, the concentration of hydrocarbons is less than a predetermined value, for example it is between 10% on dry basis and 50% on dry basis. Preferably, the concentration of hydrocarbons is approximately between 10% and 30% on dry basis.

For the aforementioned purpose (obtaining a gaseous mixture with hydrocarbon concentration in the order of 10-50% inside the autothermal reformer 14, in the zone 14a) and in accordance with a characteristic of the present invention, to the feed gaseous flow 55 comprising hydrocarbons, fed into the inlet of said reformer 14 according to a predetermined direction A-A, a rotational swirling motion around said direction is given.

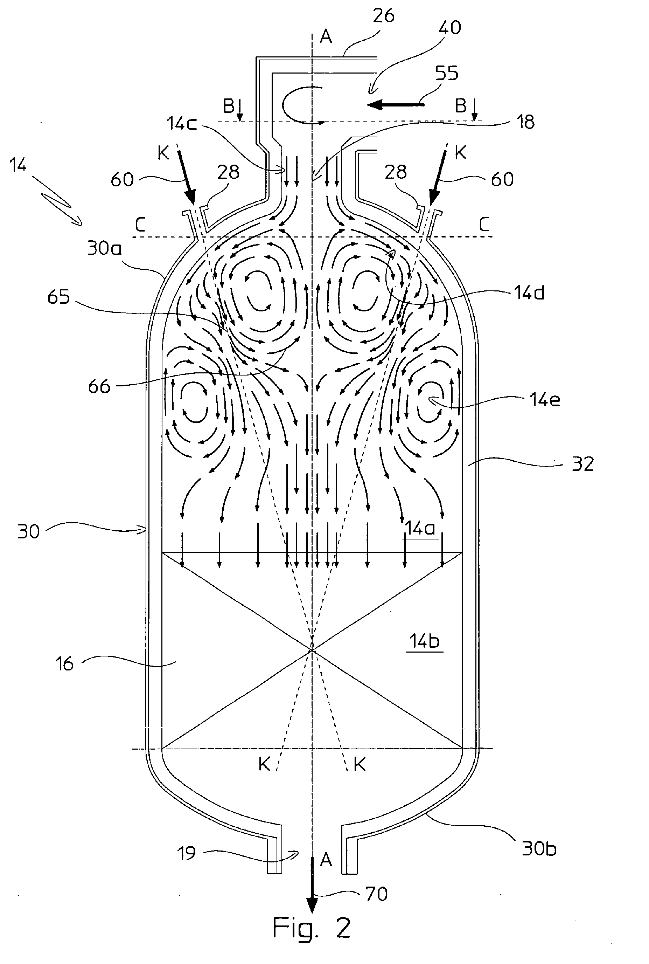

In particular and according to a further characteristic of the present invention, the aforementioned rotational swirling motion (figure 2) is carried out in a third zone 14c, substantially tubular, provided in said autothermal reformer 14, and extending for a predetermined length portion from the inlet into it of the duct 26 carrying the feed gaseous flow 55 comprising hydrocarbons, said tubular zone 14c being open in the zone 14a of partial combustion with oxygen 60 that has a cross section of greater size with respect to the size of the section of the tubular zone 14c.

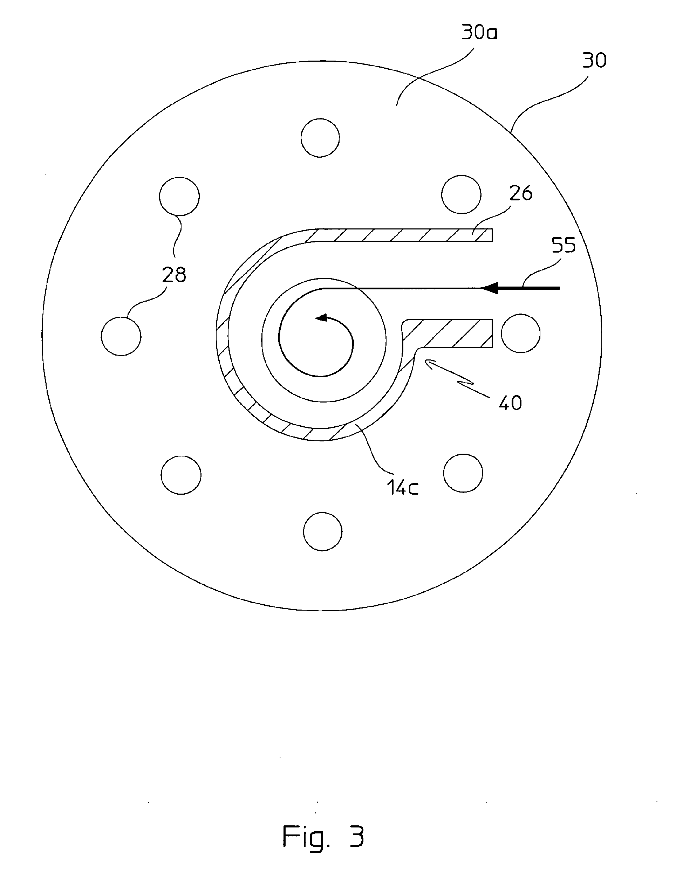

In the tubular zone 14c, which has longitudinal axis extending in the aforementioned direction A-A, swirling means 40 are provided, suitable for giving the rotational swirling motion to the gaseous flow at the inlet into the reformer 14. In the example shown in figures 2 and 3, the aforementioned swirling means 40 comprise a so-called screw inlet, formed by the tubular zone 14c and by the duct 26 carrying the feed gaseous flow 55, where the duct 26 goes into the tubular zone 14c according to an axis substantially perpendicular to the longitudinal axis A-A of the tubular zone 14c and misaligned with respect to the longitudinal axis A-A itself, i.e. - in other words - the duct 26 is inserted tangentially into the tubular zone 14c.

Alternatively, the swirling means can be in the form of other per se conventional structures and for this reason not illustrated in the figures: for example, they can comprise a radial blading made inside the tubular zone 14c, through which the rotational swirling motion is given to the feed gaseous flow 55 that is introduced into the tubular zone 14c substantially according to the longitudinal axis A-A itself.

The feed gaseous flow 55 comprising hydrocarbons is thus made to enter into the peripheral part 14d of the zone 14a substantially in the direction of the axis A-A, possessing, through the effect of the swirling means 40, a rotation component around the axis A-A.

Precisely due to the fact that the zone 14a is greater in size than the zone 14c, and due to the rotation given to the feed gaseous flow 55 comprising hydrocarbons, this flow "opens" at the inlet into the peripheral part 14d of the zone 14a, moving away from the axis A-A towards the walls of the zone 14a (shell 30 of the reformer 14) and continuing to rotate creates a "recirculation", according to a per se known phenomenon. Such a recirculation of gas schematically has a toroidal progress, around the axis A-A of the autothermal reformer 14 and with direction of rotation of the flow lines of said recirculation substantially in accordance with the flow lines of the jets of oxygen 60, at the respective nozzles 28 (figure 2).

The feed gaseous flow 55 comprising hydrocarbons, after having advantageously diluted itself with the partially transformed gas 65, passes near to the root of the diffusion flames generated at the nozzles 28, continuing to create the partially transformed gas 65 itself.

The partially transformed gas 65 in part advances towards the zone 14b and in part (66) is taken back by the aforementioned recirculation towards said peripheral part 14d of the zone 14a, where it mixes with the feed gaseous flow 55 comprising hydrocarbons, which comes from the tubular zone 14c, suitably diluting it.

From this it follows that, in normal operating conditions, the gas fed to the root of the flames essentially consists of feed gaseous flow 55 comprising hydrocarbons mixed with part (66) of partially transformed gas 65.

For this reason, such a gas is thus a gas diluted in the concentration of hydrocarbons, so that when it is sucked by the diffusion flames it does not give rise to production of soot.

A preferred embodiment of the autothermal reformer 14 is shown in the example of figure 2.

The reformer 14 comprises a substantially cylindrical shell 30, with vertical axis A-A, closed by respective bottoms, upper 30a and lower 30b, and having an inner wall coated with refractive material 32 that is resistant to the high temperatures.

The upper bottom 30a is equipped with an inlet opening 18 for gas to be reformed, i.e. of said feed gaseous flow 55 comprising hydrocarbons, and the lower bottom 30b is equipped with a discharge opening 19 of said synthesis gas 70.

The first zone 14a is superimposed to the second zone 14b (where the catalytic bed 16 is supported in a per se known way) and the zones 14a and 14b are aligned along the vertical axis A-A. The third zone 14c extends above said inlet opening 18 and is open in said first zone 14a, for example it is superimposed to the first zone 14a and it is aligned along the vertical axis A-A.

In said first zone 14a the plurality of nozzles 28 is provided that are preferably symmetrical with respect to the axis A-A of the reformer 14, have axes K-K incident to the axis A-A itself and are at a same imaginary circumference, lying in a plane C perpendicular to the axis A-A, for example positioned in an intermediate zone of said zone 14a, as can be seen in figures 2 and 3. Alternatively, the nozzles 28, having axes K-K incident to the axis A-A, are at imaginary circumferences lying in planes perpendicular to the axis A-A. Preferably, the axes K-K form an angle of between 0° and 90° with the axis A-A. Again preferably, the nozzles 28 are equally spaced apart on the aforementioned circumference.

In this way (figure 2), it should be noted how the aforementioned recirculation forms in a space of the zone 14a, i.e. in the peripheral part 14d, which is substantially above the imaginary conical surface that has the axes K-K of the nozzles 28 as generatrices.

Moreover, the jets of oxygen 60 cause the formation of a further recirculation in a space 14e of the zone 14a that lies substantially below the imaginary conical surface that has the axes K-K of the nozzles 28 as generatrices. Said further recirculation is formed from a part of the partially transformed gas 65.

As can be seen in figure 2, said further recirculation has a toroidal development, said torus having as its axis the axis A-A of the reformer 14; the direction of rotation of the flow lines of said further recirculation is such as to be in accordance, at the jets of oxygen 60 coming from the nozzles 28, with the flow lines of the jets themselves of oxygen 60.

In the non-limiting example case of the autothermal reformer 14 illustrated in figure 2, the mixing between the part 66 of the partially transformed gas 65 with the feed gaseous flow 55 comprising hydrocarbons coming from the duct 26 takes place inside the reformer 14 itself. Alternatively, the mixing can take place outside the reformer 14, for example along the duct 26.

The parameters for adjusting the recirculation, and consequently for lowering the concentration of hydrocarbons below predetermined values are, for example, the feeding speed of the feed gaseous flow 55 comprising hydrocarbons into the zone 14c, the degree of the swirling of said gas, the feeding speed of the jets of oxygen 60 in the nozzles 28, the number of nozzles 28, the position of the nozzles 28 in the zone 14a and the direction of the axes K-K of the nozzles 28.

From the previous description it can clearly be seen that the process for producing synthesis gas according to the invention solves the technical problem and gives numerous advantages the first of which lies in the fact that in the autothermal reformer the production of soot is eliminated even with high concentrations of hydrocarbons in the feed gaseous flow 55.

Of course, a man skilled in the art can bring numerous modifications and variants to the process for producing synthesis gas described above, in order to satisfy contingent and specific requirements, all of which are in any case covered by the scope of protection of the present invention, as defined by the following claims.

## Claims

1. Process for producing synthesis gas (70) through autothermal catalytic reforming of a feed gaseous flow (55) comprising hydrocarbons, obtaining partially transformed gas (65) and synthesis gas (70), **characterized in that** said feed gaseous flow (55) comprising hydrocarbons is mixed with a part (66) of said partially transformed gas (65), before being subjected to said autothermal catalytic reforming, so as to achieve a dilution of the concentration of the hydrocarbons present in it.

2. Process for producing synthesis gas (70) through autothermal catalytic reforming of a feed gaseous flow (55) comprising hydrocarbons in a respective autothermal reformer (14), obtaining partially transformed gas (65) and synthesis gas (70), said autothermal catalytic reforming treatment comprising a step of partial combustion with oxygen (60) followed by a catalytic reforming step, **characterized in that** said feed gaseous flow (55) comprising hydrocarbons, before being subjected to partial combustion with oxygen (60) in said autothermal reformer (14), is mixed with a part (66) of said partially transformed gas (65), so as to achieve a dilution of the concentration of the hydrocarbons present in it.

3. Process according to claim 2, **characterized in that** said feed gaseous flow (55) comprising hydrocarbons is mixed with said part (66) of said partially transformed gas (65) inside said autothermal reformer (14).

4. Process according to claim 2 or 3, **characterized in that** the amount of partially transformed gas (65) mixed with said feed gaseous flow (55) comprising hydrocarbons is such that in the gaseous mixture to be subjected to the step of partial combustion with oxygen (60) of said autothermal reforming, the concentration of hydrocarbons is less than a predetermined value.

5. Process according to claim 4, **characterized in that** said predetermined value is between 10% and 50%.

6. Process according to claim 3, **characterized in that** the mixing of said feed gaseous flow (55) comprising hydrocarbons and of said partially transformed gas (65) takes place by giving said feed gaseous flow (55) comprising hydrocarbons, fed into the inlet of said autothermal reformer (14), a rotational swirling motion around the predetermined feeding direction (A-A).

7. Process according to claim 1 or 2, **characterized in that** said autothermal catalytic reforming treatment is preceded by the following operative steps:
- subjecting a part (20) of a gaseous flow (50) comprising hydrocarbons to steam reforming obtaining a gaseous flow (24) comprising carbon monoxide, hydrogen, carbon dioxide, steam and unreacted hydrocarbons,
- recombining said gaseous flow (24) comprising carbon monoxide, hydrogen, carbon dioxide, steam and unreacted hydrocarbons with the untreated part (22) of said gaseous flow (50) comprising hydrocarbons to constitute said feed gaseous flow (55) comprising hydrocarbons that is subjected to said autothermal catalytic reforming treatment.

8. Apparatus for producing synthesis gas (70), through autothermal catalytic reforming of a feed gaseous flow (55) comprising hydrocarbons, which comprises an autothermal reformer (14) that has vertical axis (A-A) and is equipped with an inlet opening (18) of gas to be reformed and with a discharge opening (19) of said synthesis gas (70), in said autothermal reformer (14) a first zone (14a) and a second zone (14b) being defined, in direct fluid communication with each other and superimposed with each other and aligned along the vertical axis (A-A), in said first zone (14a) a plurality of nozzles (28) being provided to feed oxygen (60), in the second zone (14b) a catalytic bed (16) being supported, **characterized in that** in said autothermal reformer (14) a third substantially tubular zone (14c) is defined extending above said inlet opening (18) and open in said first zone (14a), in said third zone (14c) swirling means (40) being supported suitable for giving a rotational swirling motion to the gas to be reformed at the inlet into the autothermal reformer (14).

9. Apparatus according to claim 8, **characterized in that** said nozzles (28) have axes (K-K) incident to the axis (A-A) of the autothermal reformer (14) and are at one or more imaginary circumferences lying in planes (C) perpendicular to the axis (A-A) of the autothermal reformer (14).

10. Apparatus according to claim 9, **characterized in that** said axes (K-K) of said nozzles (28) form an angle of between 0° and 90° with the axis (A-A) of the autothermal reformer (14).

11. Apparatus according to claim 9 or 10, **characterized in that** said axes (K-K) of said nozzles (28) are symmetrical with respect to the axis (A-A) of the autothermal reformer (14), and are equally spaced apart on said imaginary circumference.
